# EUROPEAN PATENT APPLICATION

(11) **EP 4 600 014 A2**
(43) Date of publication of application: **13.08.2025**
(21) Application number: 25155712.0
(22) Date of filing: 04.02.2025
(51) Int. Cl.: B29C 45/14, B29K 705/00, B29K 705/02, B29L 31/00

(54) **METHOD FOR FORMING A COMPOSITE COMPONENT HAVING A SURFACE PROJECTION**

(30) Priority: 07.02.2024 US 202418435825
(71) Applicant: Joysonquin Automotive Systems North America, LLC, Troy, MI 48098 (US)
(72) Inventor: LUCAS, Michael, Troy, Michigan, 48098 (US)
(74) Representative: Betten & Resch

(57) **Abstract**

A method for manufacturing a composite component may include obtaining an image to be projected from an exterior surface of the component, forming an injection mold (500) having a negative of the image formed on a portion of the mold surface, preparing a first surface of a portion of the stock material, placing the stock material (530) into the injection mold, and injecting mold material into the injection mold. The injection mold may cause the mold material to deform the stock material such that the image projects from a second surface of the portion of stock material.

## Description

### BACKGROUND

This disclosure relates to the field of manufacturing, specifically manufacturing multi-material composites using injection molding techniques.

Composite plates made out of a layer of metal and a layer of plastic are used for a variety of purposes. For example, one such use is for decorative automotive component for vehicles For example, decorative automotive components can include various plates or accents used in the interior or exterior of a vehicle. One example of such a decorative automotive component is sill plate, which is a decorative plate placed at the bottom door sill of a vehicle. Decorative automotive components can be used to show the make, model, or a logo associated with the vehicle as a surface projection. Metal decorative automotive components are desirable for durability, but a solid metal plate is not only heavy, but also costly and time-consuming to manufacture. Composite decorative automotive components (i.e., having a layer of metal over a portion of plastic) are lighter, easy to install, and have lower material costs. However, existing methods of manufacturing composite plates having decorative surface projections require pre-forming of the metal plate. In other words, the design is stamped into the metal plate first, then additional operations can be performed to create the composite plate.

This document describes a method that addresses at least some of the issues described above and/or other issues.

### SUMMARY

In one aspect, a method for manufacturing a composite component may include obtaining an image to be projected from an exterior surface of the component, forming an injection mold having a negative of the image formed on a portion of the mold surface, preparing a first surface of a portion of the stock material, placing the stock material into the injection mold, and injecting mold material into the injection mold. The injection mold may cause the mold material to deform the stock material such that the image projects from a second surface of the portion of stock material.

In some embodiments, the stock material is a metal or includes a metal.

In some embodiments, the stock material is aluminum or includes aluminum.

In some embodiments, the stock material may include a plate having a thickness between about 0.1 mm to about 2.0 mm.

In some embodiments, the mold material is a plastic or includes a plastic.

In some embodiments, injecting the mold material into the mold may include injecting the mold material at a pressure between about 10,000 PSI to about 25,000 PSI.

In some embodiments, the method may include tuning parameters of the obtained image.

In some embodiments, the stock material is pre-formed in an area where the image is projected.

In some embodiments, the method may include cooling the mold material. An adhesive may bond together the cooled mold material and the stock material to form the component.

In some embodiments, the component may be a decorative automotive component.

In some embodiments, the mold material may form at least one surface feature.

In some embodiments, the surface feature may include at least one of: an engagement feature, a decorative feature, a strengthening feature, or a weight-reducing feature.

In some embodiments, the stock material may include a flat plate.

In some embodiments, the flat plate may not pre-formed by a stamping process.

In some embodiments, depressions on an interior surface of the mold may form the negative of the image.

In some embodiments, the deforming may be caused by pressure from the mold material causing the stock material to be pushed into the depressions.

In some embodiments, the preparing may include applying an adhesive to the first surface.

In some embodiments, the preparing may include adding an additive to the injection material. The additive may increase a surface energy of the injection material to increase adherence of the injection material to stock material.

In some embodiments, the preparing may include mechanically modifying the first surface.

In some embodiments, the mechanically modifying may include roughening the first surface.

### BRIEF DESCRIPTION OF THE DRAWINGS

FIG. 1 is a top view of an example composite component.
FIG. 2 is a bottom view of the example composite component of FIG. 1.
FIG. 3 is an illustration of a cross-sectional view of an example composite component.
FIG. 4 is a flowchart illustrating an example process for producing a composite component.
FIG. 5 is a side cross-sectional view of an example mold and complete composite decorative component.

### DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" (or "comprises") means "including (or includes), but not limited to." When used in this document, the term "exemplary" is intended to mean "by way of example" and is not intended to indicate that a particular exemplary item is preferred or required.

In this document, when terms such "first" and "second" are used to modify a noun, such use is simply intended to distinguish one item from another, and is not intended to require a sequential order unless specifically stated. The term "approximately," when used in connection with a numeric value, is intended to include values that are close to, but not exactly, the number. For example, in some embodiments, the term "approximately" may include values that are within +/- 10 percent of the value.

In this document, the term "connected", when referring to two physical structures, means that the two physical structures touch each other. Devices that are connected may be secured to each other, or they may simply touch each other and not be secured.

When used in this document, terms such as "top" and "bottom," "upper" and "lower", or "front" and "rear," are not intended to have absolute orientations but are instead intended to describe relative positions of various components with respect to each other. For example, a first component may be an "upper" component and a second component may be a "lower" component when a device of which the components are a part is oriented in a first direction. The relative orientations of the components may be reversed, or the components may be on the same plane, if the orientation of the structure that contains the components is changed. The claims are intended to include all orientations of a device containing such components.

This disclosure is not limited to the particular systems, methodologies or protocols described, as these may vary. The terminology used in this description is for the purpose of describing the particular versions or embodiments only, and is not intended to limit the scope.

In various embodiments, composite components made out of layers of two different materials (e.g., a metal and a plastic) may be used for a variety of purposes. For example, decorative automotive components (such as a vehicle sill plate or other interior or exterior component) can include a layer of aluminum (or other metal) with a plastic portion underneath. As stated in the background section above, a decorative automotive component may be a decorative plate or accent placed on the exterior or in the interior of a vehicle (such as a sill plate placed at the bottom door sill of a vehicle, door panel, a pedal, a dashboard panel, or other decorative trim). The aluminum portion can have a surface projection showing the make, model, or a logo associated with the vehicle, or another decorative design feature. The aluminum may provide both a decorative and durable plate placed in a location that may receive a lot of wear (i.e., the bottom of the door sill where the driving will routinely enter and exit the vehicle). The plastic layer underneath can permit the sill plate to be attached to vehicle by providing snap fit features or screw bosses to engage with another portion of the vehicle.

Conventional methods of manufacturing decorative automotive components or other composite components having decorative surface projections require pre-forming of a metal stock plate by stamping the design into the stock. Then, an injection mold is formed to align with the stamped design in the plate. The pre-formed plate can be placed into the mold, where the composite plate would be formed.

The methods disclosed in this document may eliminate the need for pre-forming, thus saving the significant time and monetary cost associated with pre-forming the metal stock material. For example, the disclosed methods may eliminate machinery and the need to create tooling for the stamping process, in addition to reducing the time needed to stamp the plates and potentially transport them from a stamping location to a finishing location.

Instead, the disclosed methods may use a stock material that is not pre-formed. A standard stock material may be placed into an injection mold. One side of the injection mold may have a negative of the desired image to be projected from the outer surface of the stock material. The pressure from a second material being injected into the injection mold may deform the stock material and forces the stock material into the negative image formed in the mold, thus giving the stock plate a projection of the image on its outward facing surface.

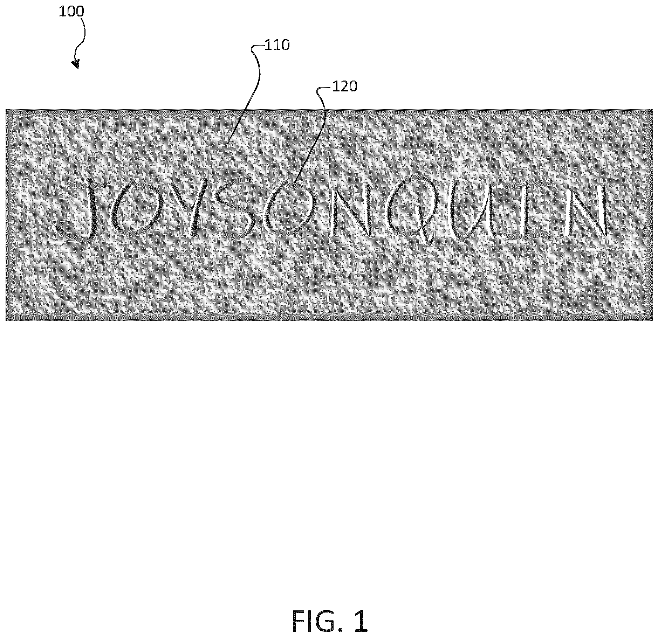

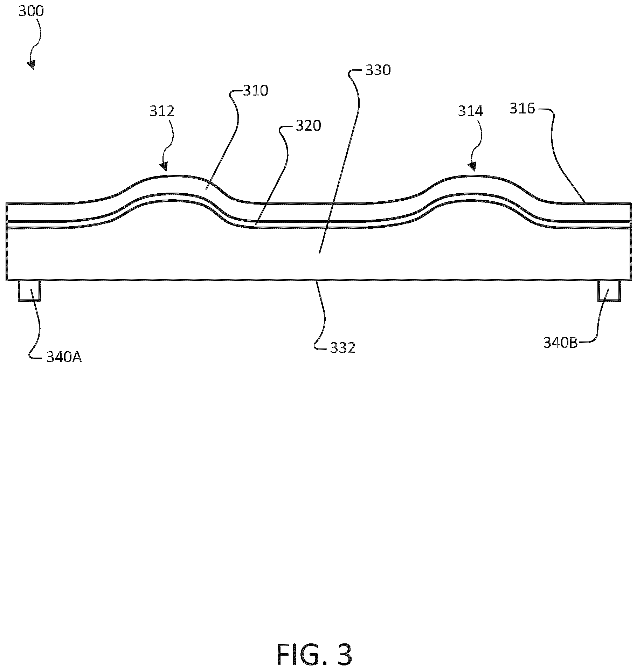

FIGS. 1-3 illustrate examples of composite decorative components that can be created using the disclosed methods. Composite decorative component **100** is illustrated as a vehicle sill plate, but it is understood that many other types of components are possible. The outer surface of component **100** may include a projection **120.** Projection **120** can take a variety of forms, such as words, logos, patterns, or other designs. Projection **120** can protrude outward away from surface **110,** as shown in FIG. 1 and FIG. 3. In other embodiments, portions of projection **120** may be recessed - in other words, in the example of FIG. 1, the letters of "JOYSONQUIN" could be recessed, while the remainder of surface **110** protrudes outward around the letters. While the figures illustrate component **100** as having a rectangular-shaped cross section, component **100** is not limited to any particular shape. For example, component **100** can take the form of a circle, oval, diamond, triangle, parallelogram, or other desired shape.

Further, while the figures and accompanying description generally describe component 100 as being a generally flat plate, one of ordinary skill in the art would understand that the disclosed methods could be used to create components of a variety of three-dimensional shapes. For example, as described in greater detail below, disclosed methods could be used to create a composite component **100** in the shape of hemisphere by varying the shape of the injection mold.

Component **100** includes a back surface **130.** Back surface **130** can be made from a different material than front surface **110.** Back surface **130** may include one or more surface features **140A-E.** Surface features **140A-E** can include decorative features, such as designs, patterns, words, logos, or the like. Surface features **140A-E** can include engagement features used to attach the component **100** to another structure, such as screw bosses or holes, snap-fit features, flanges, regions for receiving an adhesive, or other suitable features. Surface features **140A-E** can further include strengthening or weight-reducing features such as ribs, gussets, cutouts, etc.

FIG. 3 illustrates an exemplary composite component **300** having a first material **310** and a second material **330.** In some embodiments, the first material **310** and second material **330** can be bound together by an adhesive layer **320.** The first material **310** can include or be a metal, such as aluminum or other suitable metallic material, as will be understood by one of ordinary skill in the art. First material **310** can form a first surface **316** that can include one or more projections **312, 316** protruding from surface **316.** Second material **330** can form a second surface **332.** Second surface **332** can have one more surface features **340A, 340B,** which can takes forms substantially as described above with respect to surface features **140A-E.** Second material **330** can be a material that is capable of being injection molded, including but not limited to acrylonitrile butadiene styrene (ABS), nylon, polycarbonate (PC), polyethylene (PE), thermoplastic elastomer (TPE), thermoplastic polyurethane (TPU), acrylic, or others. Adhesive **320** can be any suitable adhesive for bonding first material **310** to second material **330.** Adhesive **320** may be selected based on the specific materials of first material **310** and second material **330.** For example, adhesive **320** may be a specially formulated adhesive to bond aluminum to a certain plastic (e.g., ABS), such as those produced by Nolax^{™}. Other embodiments may not include a separate adhesive layer.

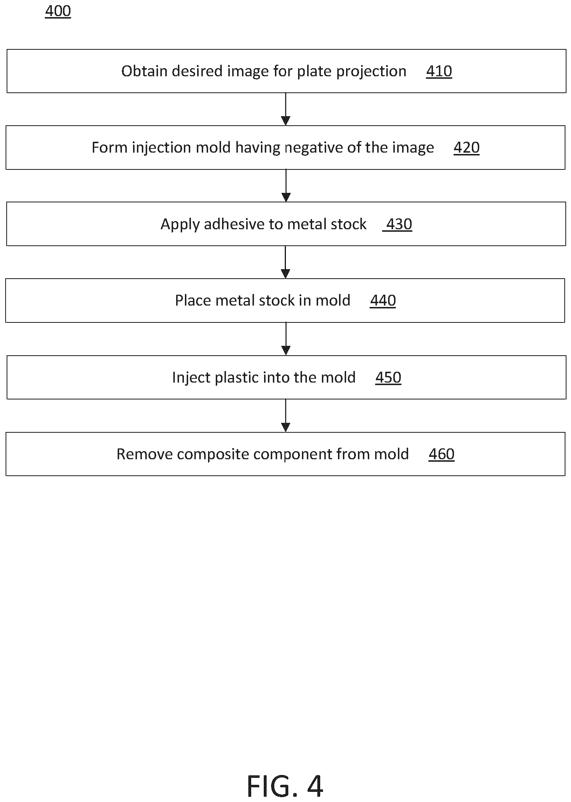

FIG. 4 is a flowchart illustrating one example of a process **400** for manufacturing a composite component, such as components **100** and **300** described above, in accordance with some embodiments. Process **400** can begin at step **410.** Step **410** can include obtaining an image to be projected from an exterior surface of the component. The image can be a representation of the text, letters, numbers, logos, patterns, or other designs which are to be projected from the completed component. As an example, with reference to FIG. 1, the image could be a representation of the "JOYSONQUIN" in a particular font style, as is to be shown on the component.

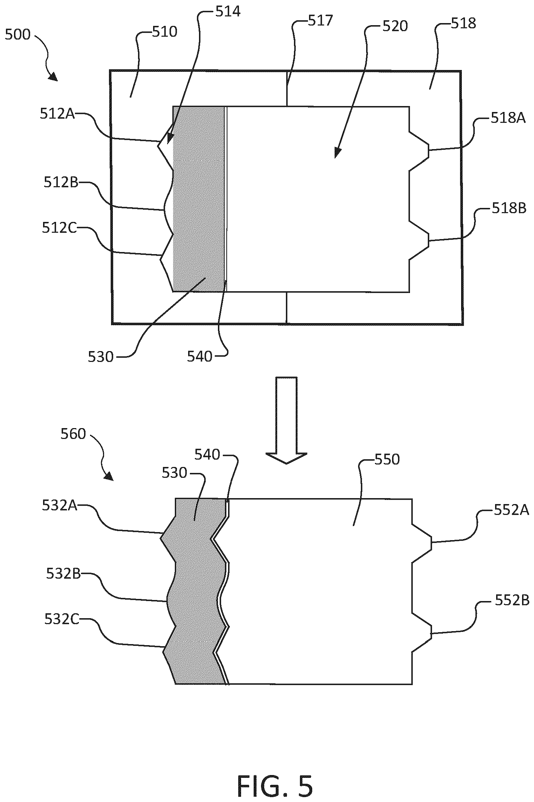

At **420,** process **400** may include forming an injection mold having a negative of the image formed on a portion of the mold surface. The injection mold can generally be formed by known techniques for manufacturing molds, such as laser etching or machining. For example, a computer could be used to generate the negative of the image and a laser etching machine or CNC mill can be used to generate a mold plate having the negative. The side of the mold which is to contact the stock material includes a negative of the image obtained at **410.** By placing the negative of the image on the mold, the image itself will appear on the completed component after the process is complete. This will occur because in later steps, the stock material will be pressed into the negative image by injected mold material. For example, with reference to FIG. 5, mold portion **510** can include a negative of an image desired to be projected by stock material **530** in the completed component. Accordingly, mold portion **510** can include one or more depressions **512A-C.** When stock material **530** is forced into the depressions **512A-C,** it may take a shape opposite of the depressions. The shapes and sizes of depressions **512A-C** may depend on the image features to be projected by finished component.

As further illustrated by FIG. 5, an injection mold can have a first mold portion **510** and a second mold portion **516.** In some embodiments, the two mold portions **510, 516** can meet at a seam and form a mold cavity **520.** As described above, first mold portion **510** can include the negative image. Similarly, second mold portion **516** can include negatives **518A, 518B** of surface features, such as decorative design features, strengthening or weight-reducing features, or engagement features.

In some embodiments, process **400** can include tuning parameters of the obtained image. For example, in some cases, creating an exact replica (in negative form) of the image in the injection mold will result in image loss. In other words, the image formed in the stock material will not closely resemble the obtained desired image. Depending on the hardness or elasticity of the stock material, thickness of the stock material, injection pressure, and other variables, the stock material may not deform to fit the mold exactly. As another example, stock material may not form well in molds with very small details or sharp corners. Accordingly, one or more parameters of the image may be tuned to produce a mold that that results in a finished component with a more accurate representation of the obtained image. Parameters can include relatives sizes of various features of the image, aspect ratio, edge smoothness, etc. As mentioned above, other variables related to the molding process such as depth of the molded features, stock and mold material properties, and injection pressure can also influence the appearance of the finished component and can be tuned until a desirable result is achieved. Accordingly, the mold formed at step **420** can be formed based on the tuned parameters to produce the desired completed component.

At **430,** process **400** can include preparing a first surface of a portion of the stock material. Preparing the first surface can include applying an adhesive to a first surface of a portion of stock material. In some embodiments, preparing the first surface can include adding an additive to the injection material. Rather than apply a separate adhesive, the additive can increase adherence of the injection material to the stock material, for example, by increasing the surface energy of the injection material. In further embodiments, preparing the first surface can include mechanically modifying the first surface, for example by roughening the first surface to form a mechanical bond between or increase adhesion between the injection material and the stock material.

As described above with respect to first material **310** of FIG. 3, stock material can be or include a metal, including aluminum, tin, or other suitable material as will be understood by one of ordinary skill in the art. The stock material can take a variety of forms, such as a flat plate having parallel sides. The plate can be substantially rectangular in shape, or can take other shapes as described herein. The stock material may not be pre-formed by a stamping process or other process to produce the image on a surface of the plate. In other words, the stock material can be plain standard plate stock material that does not receive any form of image until the injection molding process occurs. In other embodiments, the stock material can include some pre-forming in an area where an image is to be projected. The stock material can be a plate having a thickness equal to or less than about 2.0 mm. In some embodiments, the stock material may be a plate of material having a thickness from about 0.1 micrometer to about 2.0 mm. In some embodiments, the stock material can be a plate having a thickness between about 0.5 mm to 0.8 mm or between about 0.2 mm to 1.0 mm. In other embodiments, the thickness of the stock material may even be as thin as 0.1 microns, for example, when the stock material is a gold leaf. For example, various types of materials can be used.

As described above, the adhesive can be any suitable adhesive for bonding the stock material to the mold material. Adhesive **320** may be selected based on the specific materials of first material **310** and second material **330.** For example, adhesive **320** may be a specially formulated adhesive to bond aluminum to a certain plastic (e.g., ABS), such as those produced by Nolax^{™} (e.g., Nolax A22.5010 SP).

At **440,** process **400** can include positioning the stock material into the injection mold. The stock material can be placed into the mold such that a second surface of the stock material faces the portion of the mold that includes the negative of the image obtained at step **410.** The first surface of the stock material (having the adhesive applied at step **430**) can face the interior cavity of the mold. Such an orientation of the stock material may expose mold material injected into the mold to the adhesive. For example, with reference to FIG. 5, stock material **530** may be placed against the mold portion **510.** Stock material 530 can be held in the mold by, for example, tooling hole hangers or other known methods of securing stock into molds.

Depressions **512A-512C** may form the negative of the image. When stock material **530** is placed into the mold **500,** void **514** can be formed between stock material **530** and depressions **512A-C.** The first side of stock material **530** having adhesive **540** can face into cavity **520** of mold **500.** When mold material is injected into cavity **520,** the mold material can be exposed to adhesive **540,** causing the mold material to bond the stock material **530.** Further, the pressure from the mold material may cause deformation of the stock material **530,** causing the stock material to fill in void **514** and contact depressions **512A-C.**

In some embodiments, positioning the stock material in the mold can include opening the mold to expose cavity **520,** positioning the stock material, and closing the mold to seal it and prepare it for injection. For example, opening the mold can include separating a first mold portion **510** from a second mold portion **516.** The two mold portions may separate at seam **517,** to allow the stock material to be positioned with the first mold portion **510.**

At **450,** process **400** can include injecting mold material into the injection mold. As described above with respect the second material of FIG. 3, mold material can be a material that is capable of being injection molded, such as a plastic resin including but not limited to acrylonitrile butadiene styrene (ABS), nylon, polycarbonate (PC), polyethylene (PE), polypropylene (PP), thermoplastic elastomer (TPE), thermoplastic polyurethane (TPU), acrylic, or others, including composites of the listed or other materials. Known techniques of injection molding can be used to inject, for example, through a high pressure nozzle, mold material into the mold containing the stock material. When the high pressure mold material is injected into the mold, it may contact the stock material inside the mold. The injection mold may be configured such that this contact will deform the stock material such that the image projects from the second surface of the portion of stock material. The mold material can be injected in a variety of suitable pressures, such as a pressure between about 10,000 PSI to about 25,000 PSI.

As an example, with reference to FIG. 5, mold material can be injected into cavity **520** such that cavity **520** may be filled. The mold material may contact adhesive **540** on the first surface stock material **530.** The pressure from the mold material pushing on stock material **530** may cause the stock material **530** to deform. The deformation may cause the surface opposite of adhesive **540** to take the shape of depressions **512A-C.** In some embodiments, the first surface to which adhesive **540** may be applied can also deform to resemble depressions **512A-C.**

In some embodiments, process **400** can include cooling the mold material. For example, the mold material may be cooled by air cooling over a predetermined period of time. During the cooling process, the mold material can solidify and bond to the stock material via the adhesive applied to the stock material.

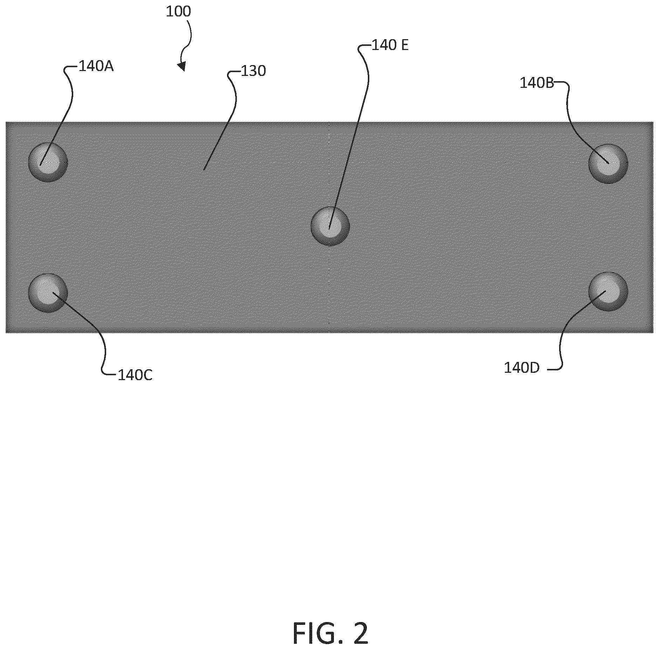

At **460,** process **400** can include removing a complete composite component from the mold. This can include separating first mold portion **510** from second mold portion **516** to allow completed component **560** to be released from the mold. Completed component **560** can have projections **532A-C** corresponding to depressions **512A-C** of mold portion **510.** Adhesive **540** can hold stock material **530** bonded to mold material **550.** Further, mold material **550** can have surface features **552A,B** corresponding to negatives **518A, 518B** of surface features. The completed component can be a decorative automotive component, such as the sill plate depicted by FIGS. 1 and 2.

Implementing such a manufacturing method to produce a composite component completely eliminates the need for preforming stock material plates, thus significantly reducing the cost of producing components. Further, by eliminating a step from the manufacturing process, the time to produce components can also be reduced.

Other advantages of the present invention can be apparent to those skilled in the art from the foregoing specification. Accordingly, it will be recognized by those skilled in the art that changes or modifications may be made to the above-described embodiments without departing from the broad inventive concepts of the invention. It should therefore be understood that this invention is not limited to the particular embodiments described in this document, but is intended to include all changes and modifications that are within the scope and spirit of the invention as defined in the claims.

## Claims

1. A method for manufacturing a composite component comprising:
obtaining an image to be projected from an exterior surface of the component;
forming an injection mold having a negative of the image formed on a portion of the mold surface;
preparing a first surface of a portion of the stock material;
placing the stock material into the injection mold; and
injecting mold material into the injection mold;
wherein the injection mold causes the mold material to deform the stock material such that the image projects from a second surface of the portion of stock material.

2. The method of claim 1, wherein the stock material includes a metal.

3. The method of claim 2,
wherein the stock material includes aluminum; and
wherein, optionally, the stock material is a plate having a thickness 2.0 mm or less.

4. The method of one of claims 1 to 3, wherein the mold material includes a plastic.

5. The method of one of claims 1 to 4, wherein injecting the mold material into the mold comprises injecting the mold material at a pressure between about 10,000 PSI to about 25,000 PSI.

6. The method of one of claims 1 to 5,
the method further comprising tuning parameters of the obtained image; and/or
wherein the stock material is pre-formed in an area where the image is projected.

7. The method of one of claims 1 to 6 further comprising cooling the mold material, wherein an adhesive bonds together the cooled mold material and the stock material to form the component.

8. The method of one of claims 1 to 7, wherein the component is a decorative automotive component.

9. The method of one of claims claim 1 to 8,
wherein the mold material forms at least one surface feature; and
wherein the surface feature optionally comprises at least one of: an engagement feature, a decorative feature, a strengthening feature, or a weight-reducing feature.

10. The method of one of claims 1 to 9,
wherein the stock material is a flat plate; and.
wherein, optionally, the flat plate is not pre-formed by a stamping process.

11. The method of one of claims 1 to 10,
wherein depressions on an interior surface of the mold form the negative of the image; and
wherein, optionally, the deforming is caused by pressure from the mold material causing the stock material to be pushed into the depressions.

12. The method of one of claims 1 to 11, wherein the preparing comprises applying an adhesive to the first surface.

13. The method of one of claims 1 to 12, wherein the preparing comprises adding an additive to the injection material, the additive increases the surface energy of the injection material to increase adherence of the injection material to stock material.

14. The method of one of claims 1 to 13, wherein the preparing comprises mechanically modifying the first surface.

15. The method of one of claims 1 to 14, wherein the mechanically modifying comprises roughening the first surface.
